# DEMANDE DE BREVET EUROPEEN

(11) **EP 1 352 872 A1**
(43) Date de publication de la demande: **15.10.2003**
(21) Numéro de dépôt: 03290746.1
(22) Date de dépôt: 25.03.2003
(51) Int. Cl.: B67C 7/00, B65G 47/84, B65G 29/00

(54) **Ensemble outillage-support d'outillage d'une machine de conditionnement de récipients**

(30) Priorité: 26.03.2002 FR 0203801
(71) Demandeur: Pack'Réalisations S.A., 49070 Beaucouzé (FR)
(72) Inventeur: Guillon, Pierre, 49000 Angers (FR)
(74) Mandataire: Maillet, Alain

(57) **Abrégé**

La présente invention concerne un ensemble outillage (1, 2) - support d'outillage (12, 22) d'une machine de conditionnement de récipients (3), ledit outillage (1, 2) étant prévu pour être monté sur ledit support (12, 22) et servant à entraîner et guider lesdits récipients (3) dans leur déplacement le long d'un trajet au cours duquel ils sont l'objet de traitement de conditionnement, ledit outillage (1, 2) comportant au moins un plateau (10) placé horizontalement à hauteur sur ledit support (12).

Il est caractérisé en ce que ledit ou chaque support (12, 22) présente au moins un élément de support (12, 12₁, ..., 12ₙ ; 22, 22₁, ..., 22ₙ) de forme et de dimensions prévues pour pouvoir coopérer avec un élément de centrage (10ᵢ ; 20ᵢ) d'un plateau (10, 20), élément de centrage de forme et de dimensions telles qu'en coopérant avec une partie dudit ou d'un élément de support, la hauteur dudit plateau (10, 20) sur ledit support (12, 22) soit déterminée.

## Description

La présente invention concerne un ensemble outillage - support d'outillage d'une machine de conditionnement de récipients. Une telle machine de conditionnement est généralement constituée d'une chaîne de transfert sur laquelle des récipients maintenus et guidés par des outillages adaptés circulent en suivant un parcours constitué de segments d'arcs de cercle où ils peuvent être successivement remplis d'un liquide ou autre, bouchés ou operculés, puis par exemple étiquetés, etc. De tels outillages sont connus et sont généralement de deux types : les étoiles qui sont rotatives et qui sont ainsi prévues pour entraîner les récipients le long dudit parcours et les guides qui, comme le nom l'indique, assurent le guidage des récipients lors de leur parcours le long des segments d'arcs de cercle.

Chaque étoile est généralement constituée de deux plateaux horizontaux, chacun pourvu régulièrement sur son pourtour d'empreintes pour un récipient qu'il doit maintenir et entraîner. Les plateaux sont disposés généralement sur deux hauteurs ajustées à la hauteur du récipient. Pour ce faire, chaque étoile comporte des entretoises pour séparer les plateaux entre eux et ainsi déterminer leur hauteur. L'ensemble plateaux ― entretoises constitue un outillage qui est monté sur un support d'une machine de conditionnement, ledit support étant entraîné en rotation de manière synchronisée avec l'ensemble des autres étoiles de la machine.

De la même manière, les guides se composent de deux plateaux séparés entre eux par des entretoises, l'ensemble étant ajusté à la hauteur du récipient à guider. Cet ensemble est monté sur un support qui, cette fois, est fixe. La forme intérieure des plateaux épouse le contour global des étoiles de manière à ce que seule la section d'un récipient puisse passer entre l'étoile et le guide. On notera donc que les plateaux des guides ne possèdent pas d'empreinte pour loger les récipients car ils ont pour rôle de servir de rampe de guidage aux récipients.

A titre d'exemple, on connaît le document US-A-5 533 608 qui propose un type d'outillage pour machine de conditionnement de récipients comprenant des étoiles et des guides. Les étoiles sont formées de plateaux maintenus parallèles entre eux par une série d'entretoises régulièrement réparties sur leurs pourtours.

Cependant, ce type d'outillage pose un certain nombre de problèmes du fait qu'à chaque changement de type de récipient à traiter dans la machine, l'ensemble des outillages doit être changé pour être adapté à ce nouveau type de récipients.

Un des problèmes que cherche à résoudre l'invention est celui du volume engendré par les outillages de l'art antérieur composés de plateaux fixés sur des entretoises, volume qui peut devenir vite relativement important si le nombre de types de récipients que la machine peut traiter est lui-même important. En effet, ces outillages occupent, lorsqu'ils sont stockés, le même volume que sur la machine, c'est-à-dire sensiblement la surface des plateaux par la hauteur des entretoises.

De plus, les outillages de l'art antérieur sont constitués de nombreuses pièces, si bien leur fabrication, notamment leur assemblage, est long et donc coûteux.

Le but de l'invention est donc de proposer un outillage qui n'ait pas les inconvénients cités précédemment et qui soit par conséquent moins volumineux à stocker que les outillages de l'art antérieur et qui soit constitué d'un nombre relativement petit de pièces.

Pour ce faire, un ensemble outillage - support d'outillage selon l'invention est caractérisé en ce que ledit ou chaque support présente au moins un élément de support de forme et de dimensions prévues pour pouvoir coopérer avec un élément de centrage d'un plateau, élément de centrage de forme et de dimensions telles qu'en coopérant avec une partie dudit ou d'un élément de support, la hauteur dudit plateau sur ledit support soit déterminée.

Ainsi, lorsque l'on change de récipient et donc d'outillage, il est possible de ne démonter que les plateaux et de remettre les plateaux appropriés qui se positionneront automatiquement du fait de cette coopération des formes et dimensions. A stocker, ils ne prennent que le volume des plateaux ce qui est particulièrement avantageux par rapport à l'état de la technique.

Par ailleurs, du fait que le changement de l'outillage consiste essentiellement à changer de plateaux, les phases de démontage et de remontage des étoiles et des guides sont grandement simplifiées.

Dans un premier mode de réalisation de l'invention, ledit support est constitué d'un unique élément de support conique, chaque plateau comportant un élément de centrage constitué d'un trou conique de même conicité que ledit élément de support conique et dont le diamètre moyen est différent d'un plateau à l'autre selon la hauteur de positionnement à laquelle est destiné ledit plateau. Par exemple, ledit support est constitué d'au moins une branche génératrice dudit élément de support conique par rotation autour d'un axe de référence.

Dans d'autres modes de réalisation de l'invention, ledit support est constitué d'une pluralité d'éléments de support superposés de forme et de dimensions prévues pour pouvoir respectivement coopérer avec un élément de centrage d'un plateau, élément de centrage de forme et de dimensions telles qu'en coopérant avec élément de support, la hauteur dudit plateau sur ledit support soit déterminée.

Avantageusement, lesdits éléments de support sont de forme et de dimensions telles que la section d'un élément de support est inscrite dans celle d'un élément de support juste inférieure.

Dans un exemple de réalisation de ces modes, ledit support est constitué d'au moins une branche génératrice desdits éléments de support par rotation autour d'un axe de référence. Ladite ou chaque branche peut alors comporte des échancrures respectivement génératrices, par rotation autour dudit axe de référence, desdits éléments de support, la distance de chaque échancrure audit axe de référence croissant du haut vers le bas.

Avantageusement, un plateau est pourvu d'un trou qui, pour chaque branche, comporte, d'une part, une zone de dégagement dont la périphérie est à distance **r** de l'axe de référence supérieure à la distance **d** de l'échancrure avec laquelle ledit plateau est destiné à coopérer mais inférieure à la distance de l'échancrure de dimension juste supérieure et, d'autre part, d'une zone de centrage destinée à coopérer avec ladite échancrure.

Chaque échancrure est par exemple pourvue d'une gorge de largeur égale à la hauteur du plateau qu'elle peut ainsi loger, permettant une meilleure assise du plateau.

Avantageusement, des moyens de butée sont prévus pour immobiliser le plateau en rotation par rapport audit support.

Selon une autre caractéristique de l'invention, ledit ensemble outillage - support comporte des moyens de verrouillage pour verrouiller ledit outillage sur ledit support d'outillage.

Dans un premier mode de réalisation, ces moyens de verrouillage sont constitués d'un loquet pouvant pivoter autour d'un axe dudit support (ou dudit plateau) de manière à pouvoir prendre deux positions : une position de verrouillage où il se trouve à l'intérieur d'une fente dudit plateau (respectivement dudit support) et une position où il ne s'y trouve pas.

Dans un second mode de réalisation, ces moyens de verrouillage sont constitués d'une butée et d'une languette élastique comportant une excroissance, ladite butée et ladite excroissance verrouillant ledit plateau sur ledit support lorsqu'il est en place.

Dans un troisième mode de réalisation, ces moyens de verrouillage sont constitués d'une came prévue pour coopérer avec un élément de serrage de manière qu'en position de verrouillage, ledit plateau soit serré et immobilisé contre ledit support et qu'en dehors de cette position, ledit plateau soit libre de se déplacer et puisse être libéré dudit support.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
La Fig. 1 représente une vue schématique de dessus d'une chaîne de transfert d'une machine de conditionnement de récipients sur laquelle un outillage selon l'invention peut être utilisé,
Les Figs. 2a à 2c représentent des vues schématiques de supports et de parties internes de plateaux selon des différents modes de réalisation de la présente invention,
Les Figs. 3a et 3b représentent des vues schématiques de supports selon un autre mode de réalisation de la présente invention,
Les Figs. 4a à 4b sont des vues en coupe d'une étoile et d'un guide respectivement utilisés pour le transport d'un récipient de grande taille et d'un récipient de petite taille,
Les Figs. 5a et 5b représentent des vues de côté d'une étoile comportant des moyens de positionnement des plateaux selon respectivement un premier et un second modes de réalisation de l'invention,
Les Figs. 6a à 6d représentent des vues de côté, de dessus et partielle d'une étoile comportant un premier type de moyens de verrouillage d'un plateau selon l'invention,
Les Figs. 7a à 7c représentent des vues partielles d'une étoile comportant un second type de moyens de verrouillage d'un plateau selon l'invention, et
Les Figs. 8a et 8c représentent des vues de côté et partielles de dessus d'une étoile comportant un troisième type de moyens de verrouillage d'un plateau selon l'invention.

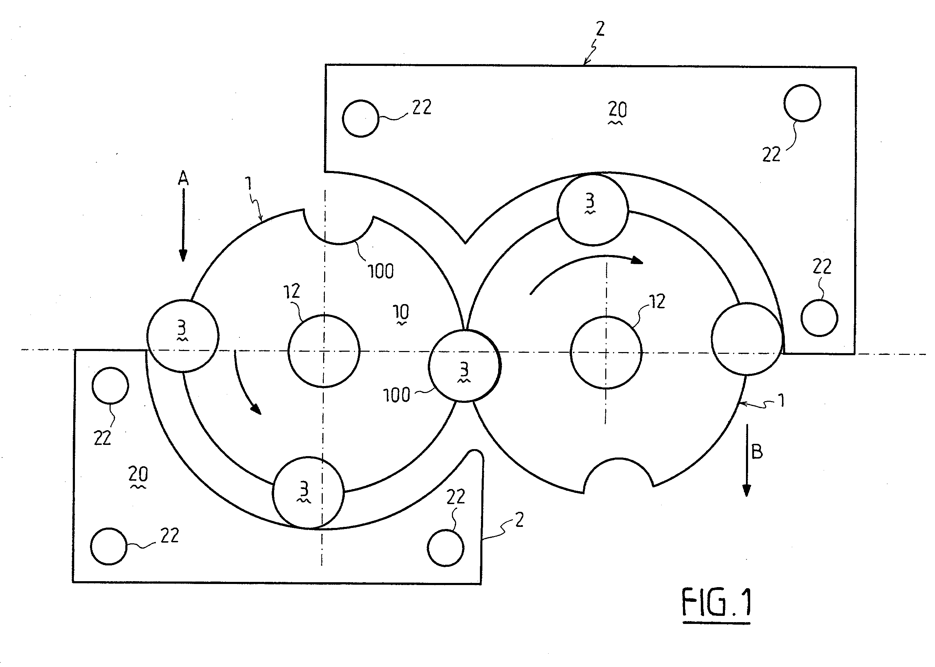

A la Fig. 1, on a représenté schématiquement une chaîne de transfert essentiellement constituée de deux étoiles 1 et de deux guides 2. Chaque étoile 1 est constituée d'au moins un plateau 10 (généralement deux) à la périphérie du ou de chacun desquels sont prévues des empreintes 100 destinées à enserrer le côté de récipients 3 de manière à pouvoir les entraîner le long d'un parcours qui ici est composé de segments d'arc de cercle successifs. Pour ce faire, chaque plateau 10 est monté sur un support 12 qui est prévu non seulement pour supporter le ou les plateaux 10 mais aussi pour le ou les entraîner en rotation.

Chaque guide 2 est également constitué d'au moins un plateau 20 (généralement deux) supporté par des supports 22 répartis de manière à assurer leur stabilité. Chaque guide 2 est fixe et entoure une partie d'une étoile 1 à distance régulière de celle-ci afin de laisser l'espace juste suffisant entre eux pour que les récipients 3 puissent y circuler. Ainsi, chaque guide 2 a pour rôle de guider les récipients 3 le long de leur parcours sur la chaîne de transfert en les obligeant à rester logés dans les empreintes 100 des plateaux 10. On notera donc que les guides 2 ne possèdent pas d'empreinte sur leur pourtour.

Les récipients 3 cheminent donc sur cette chaîne de transfert entraînés par les étoiles 1 et guidés par les guides 2 et, ce, à partir du point A jusqu'au point B. Pendant tout ce parcours, les récipients 3 peuvent subir des traitements divers, comme un remplissage de liquide ou autre, un embouteillage ou un operculage, un étiquetage, etc.

Selon l'invention, chaque support 12, 22 présente au moins un élément de support de forme et dimensions prévues pour pouvoir coopérer avec un élément de centrage d'un plateau, élément de centrage de forme et dimensions telles qu'en coopérant avec une partie dudit ou d'un élément de support, la hauteur dudit plateau sur ledit support soit déterminée.

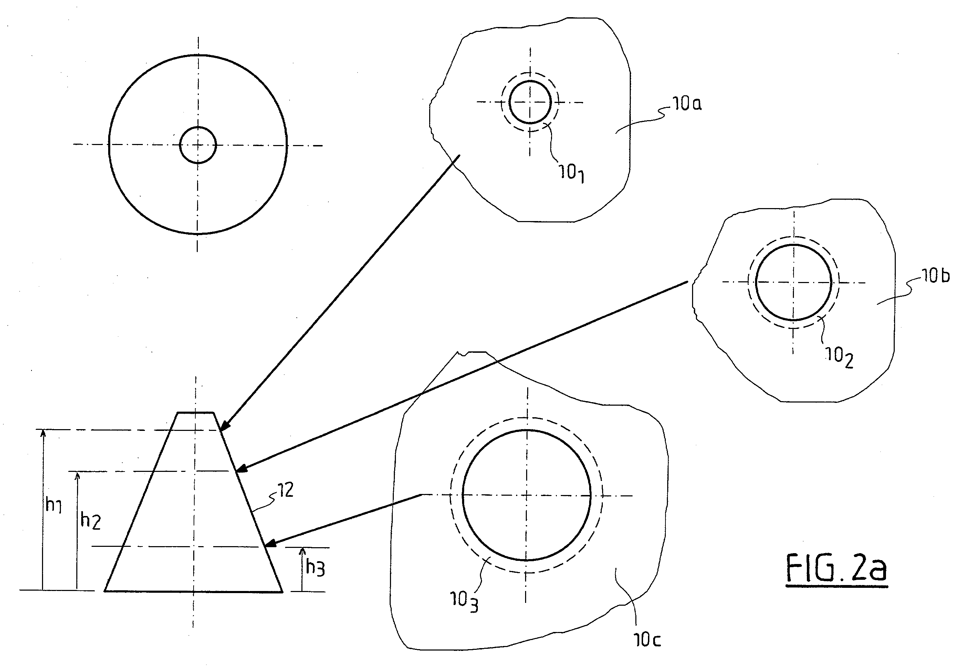

On a représenté aux Figs. 2a à 2c différents exemples de modes de réalisation de l'invention tels qu'ils viennent d'être définis. Dans ces Figs. 2a à 2c, sont visibles une vue d'un support 12, 22 de face et une autre de dessus et des vues partielles montrant les éléments de centrage de plateaux 10a, 10b et 10c.

Dans l'exemple de réalisation qui est représenté à la Fig. 2a, le support 12 est constitué d'un unique élément de support qui est conique, ou plus exactement tronconique. Tout plateau 10 qui peut être monté sur ce support 12 présente un élément de centrage, en l'occurrence un trou interne tronconique de même conicité que celui de l'élément de support 12, dont le diamètre moyen détermine la hauteur de positionnement du plateau 10. Ainsi, le plateau 10a sera positionné à la hauteur h1 correspondant à la hauteur sur le support 12 du diamètre correspondant au diamètre moyen de son élément de centrage 10₁, le plateau 10b sera positionné à la hauteur h2 correspondant à la hauteur sur l'élément 12 du diamètre correspondant au diamètre moyen de son élément de centrage 10₂ et le plateau 10c sera positionné à la hauteur h3 correspondant à la hauteur sur l'élément 12 du diamètre correspondant au diamètre moyen de son élément de centrage 10₃.

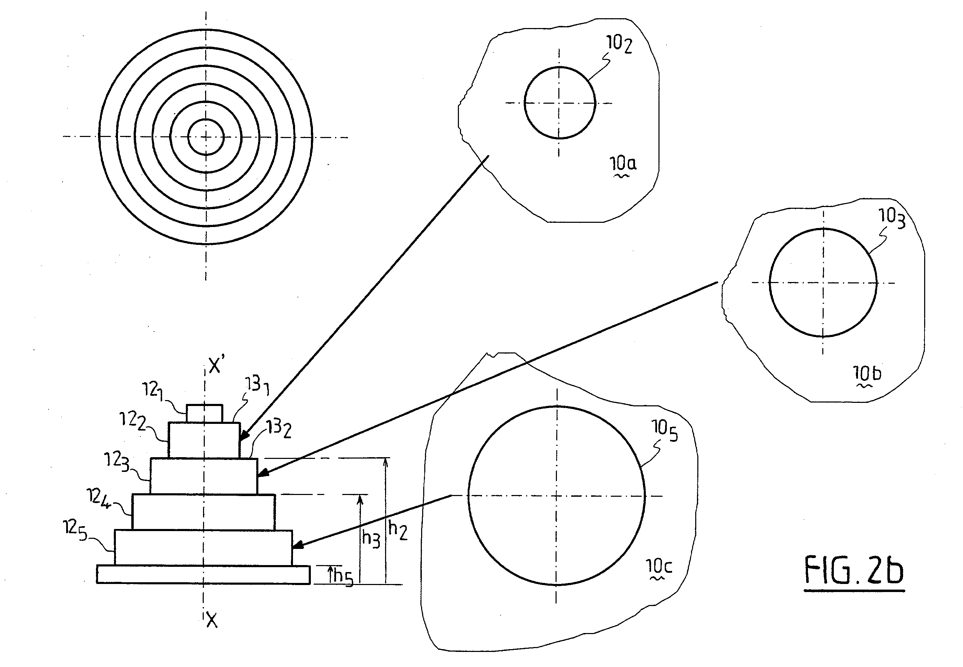

Dans le second exemple de réalisation de la Fig. 2b, le support 12 est constitué de plusieurs éléments de support 12₁ à 12₅ superposés qui sont, ici, cylindriques avec des diamètres qui sont tels qu'ils croissent du haut vers le bas. Tout plateau 10 qui peut être monté sur ce support 12 présente un élément de centrage 10ᵢ constitué d'un trou cylindrique dont le diamètre est celui de l'un des éléments de support 12₁ à 12₅. On a également représenté sur cette Fig. 2b, trois zones centrales 10a, 10b et 10c de plateaux dont les éléments de centrage sont respectivement constitués de trous 10₂, 10₃ et 10₅ percés avec des diamètres respectifs égaux aux diamètres des éléments de support 12₂, 12₃ et 12₅. On comprendra que le plateau 10a sera positionné à la hauteur h2 correspondant à la hauteur de l'élément de support 12₂ sur le support 12, que le plateau 10b sera positionné à la hauteur h3 correspondant à la hauteur de l'élément de support 12₃ sur le support 12 et que le plateau 10c sera positionné à la hauteur h5 correspondant à la hauteur de l'élément de support 12₅ sur le support 12.

Plus exactement, un plateau 10 prévu pour coopérer avec un élément de support 12ᵢ repose, par sa face inférieure, sur la base 13ᵢ de cet élément de support 12ᵢ généralement formée entre cet élément de support 12ᵢ et l'élément de support 12ᵢ₊₁ juste inférieur. Cette face inférieure se retrouve donc à la hauteur hᵢ de la base 13ᵢ de cet élément de support 12ᵢ. On notera ici que l'indice i est égal à l'une des valeurs 1 à n, n étant le nombre total d'éléments de support.

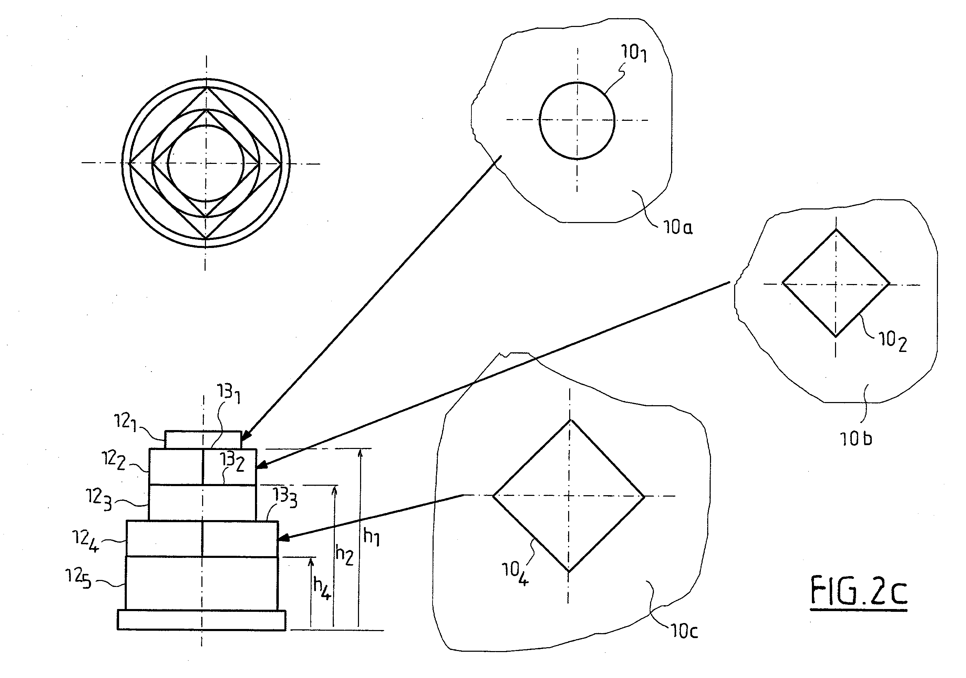

Dans un troisième exemple de réalisation de la Fig. 2c, le support 12 est constitué d'une suite d'éléments de support de forme cylindrique 12₁, 12₃, 12₅ ou carré 12₂, 12₄. Les dimensions de ces éléments de support 12₁ à 12₅ sont telles que la section d'un élément 12ᵢ (i égal 1 à 5) est inscrite dans celle d'un élément 12ᵢ₊₁ juste inférieure.

En ce qui concerne les deux précédents modes de réalisation qui peuvent également être appliqués à des étoiles comme à des guides, on peut constater que le support 12, 22 est constitué d'une pluralité d'éléments de support 12₁ à 12ₙ ; 22₁ à 22ₙ superposés de forme et de dimensions prévues pour pouvoir respectivement coopérer avec un élément de centrage 10ᵢ d'un plateau 10, 20, élément de centrage de forme et de dimensions telles qu'en coopérant avec l'élément de support, la hauteur dudit plateau 10, 20 sur ledit support 12, 22 soit déterminée.

De manière générale aussi, le support 12, 22 est constitué d'un nombre n d'éléments de support superposés dont la forme et les dimensions sont telles que la section d'un élément de support est inscrite dans celle d'un élément de support juste inférieure. On notera que cette proposition est également vraie en ce qui concerne le second exemple de réalisation décrit en relation avec la Fig. 2b.

On a également représenté sur cette Fig. 2c, trois parties centrales 10a, 10b et 10c de plateaux respectivement pourvus d'éléments de centrage constitués de trous 10₁, 10₂ et 10₄ de forme et dimensions correspondant aux éléments de support 12₁, 12₂ et 12₄. On comprendra que le plateau 10a sera positionné à la hauteur h1 correspondant à la hauteur sur le support 12 de la base de l'élément de support 12₁, que le plateau 10b sera positionné à la hauteur h2 correspondant à la hauteur sur le support 12 de l'élément de support 12₂ et que le plateau 10c sera positionné à la hauteur h4 correspondant à la hauteur sur le support 12 de l'élément de support 12₄.

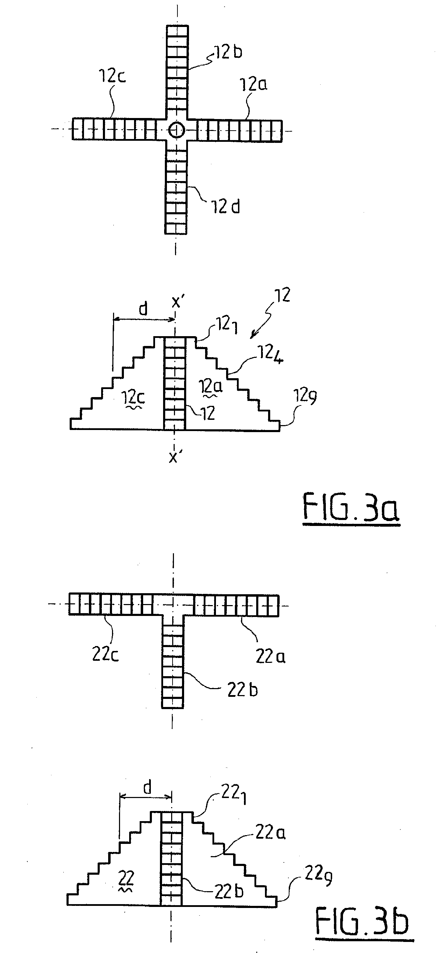

Les supports 12 représentés aux Figs. 2a et 2b sont de symétrie de révolution autour de l'axe xx' de rotation de l'étoile 1 correspondante. On notera que les plateaux 10 reposent sur la base 13ᵢ formée entre deux éléments de support 12ᵢ et 12ᵢ₊₁ constitutifs du support 12, cette base assurant leur stabilité. On a représenté à la Fig. 3a un mode de réalisation d'un support 12 qui est constitué de quatre branches 12a à 12d identiques placées à 90° les unes des autres par rapport à l'axe xx'. Chacune de ces branches 12a, 12b, 12c et 12d comporte des échelons 12₁ à 12₉ dont les distances d à l'axe xx' croissent du haut vers le bas. On comprendra que tous les échelons 12ᵢ de même niveau sont générateurs, par rotation autour de l'axe xx', d'un élément de support similaire à un élément de support 12ᵢ selon un des modes de réalisation tels qu'ils viennent d'être décrits en relation avec les Figs. 2a à 2c. Il présente l'avantage par rapport aux modes de réalisation des Figs. 2a à 2c d'être plus facilement réalisable et donc d'être plus économique.

Dans le cas de l'exemple de réalisation montré à la Fig. 2a, la ou les branches seraient alors triangulaires et seraient donc bien génératrices, par rotation autour de l'axe xx', dudit élément de support.

On comprendra aisément que les modes de réalisation qui viennent d'être décrits s'appliquent également à des supports 22.

On notera qu'un support 12 ou 22 pourrait comprendre un nombre de branches différent, par exemple 3, voire 1 ou 2, ou au contraire plus. De plus, chaque branche pourrait ne pas s'étendre radialement à partir de l'axe xx'.

En particulier, dans le cas où l'invention s'applique à des supports de guide 22, l'axe xx' n'est plus un axe de rotation et n'a par conséquent plus de réalité physique. Il sera nommé par la suite axe de référence.

A titre d'autre exemple, on a représenté à la Fig. 3b un mode de réalisation d'un support de guide 22 qui est lui constitué de trois branches 22a à 22c identiques. Chacune de ces branches 22a, 22b et 12c comporte des échelons 22₁ à 22₉ dont les distances d à un axe de référence xx' croissent du haut vers le bas. Un tel mode de réalisation pourrait être plus adapté au support 22 d'un guide 2.

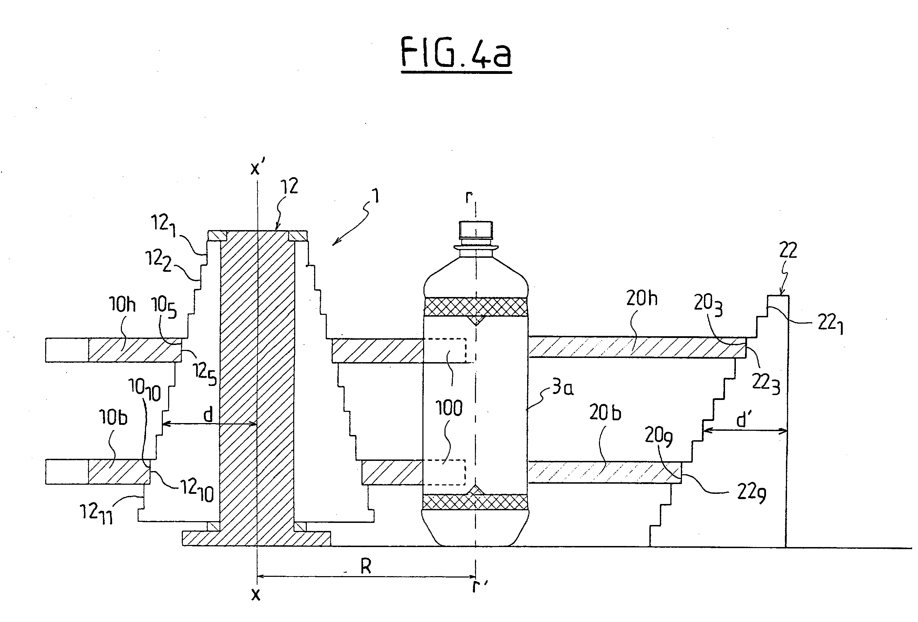

A la Fig. 4a, on peut voir deux plateaux 10h et 10b d'une étoile 1 montés sur un support rotatif 12 et embrassant un récipient 3a de relativement grandes dimensions. Le support 12 est du type constitué de branches comportant des échelons 12₁ à 12₁₁ de distances d à l'axe xx' du support 12 croissant vers le bas formant des éléments de support. Les plateaux 10h et 10b sont ici respectivement montés sur les échelons 12₅ et 12₁₀. Pour ce faire, ils comportent des éléments de centrage 10₅ et 10₁₀, par exemple des trous, de forme et dimensions correspondant respectivement aux forme et dimensions de ces échelons. Sur cette Fig. 4a, on peut également voir deux plateaux 20h et 20b montés sur un support fixe 22 et guidant le récipient 3a. Le support 22 est également du type qui comporte des éléments de support constitués d'échelons 22₁ à 22₁₂ de distances d' à un axe vertical de référence croissant vers le bas. Les plateaux 20h et 20b sont respectivement montés sur les échelons 22₃ et 22₉ et comportent donc des éléments de centrage 20₃ et 20₉ de forme et dimensions correspondant respectivement à ces échelons.

Le récipient 3a est entraîné sur un parcours d'axe rr' à distance R de l'axe de rotation xx' et embrassé, au moyen des échancrures 100, et guidé par les plateaux 10b et 10h de l'étoile 1, d'une part, et guidé par les plateaux 20b et 20h d'un guide 2, d'autre part.

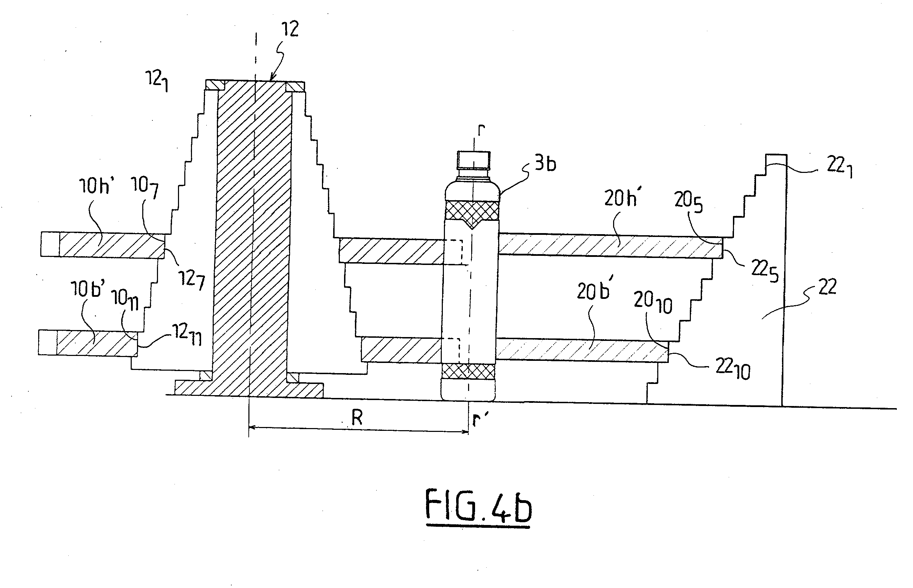

A la Fig. 4b, on peut voir maintenant deux autres plateaux 10h' et 10b' montés sur le même support rotatif 12 et embrassant cette fois un récipient 3b de relativement plus fines dimensions. Les plateaux 10h' et 10b' sont respectivement montés sur les échelons 12₇ et 12₁₁. Pour ce faire, les plateaux 10h' et 10b' comportent des élément de centrage 10₇ et 10₁₁, en l'occurrence des trous, de forme et dimensions correspondant respectivement à ces échelons 12₇ et 12₁₁. On notera que les éléments de centrage 10₇ et 10₁₁ sont de forme et dimensions différentes des éléments de centrage 10₅ et 10₁₀ décrits en relation avec la Fig. 4a. Sur la Fig. 4b, on peut également voir deux autres plateaux 20h' et 20b' montés sur un support fixe 22 et guidant le récipient 3b. Les plateaux 20h' et 20b' sont respectivement montés sur les échelons 22₅ et 22₁₀ et comportent alors des éléments de centrage 20₅ et 20₁₀ de forme et dimensions correspondant respectivement à ces échelons 22₅ et 22₁₀.

A l'instar du récipient 3a, le récipient 3b est entraîné sur un parcours d'axe rr' à distance R de l'axe de rotation xx' et embrassé, au moyen des échancrures 100, et guidé par les plateaux 10b et 10h de l'étoile 1, d'une part, et guidé par les plateaux 20b et 20h d'un guide 2, d'autre part.

On notera que la distance R entre l'axe de parcours rr' et l'axe de l'étoile 1 est identique quel que soit le récipient 3 utilisé. En effet, les dispositifs de traitement (dispositif de remplissage, dispositif d'embouteillage, dispositif d'étiquetage, etc.) sont centrés par rapport à l'axe du parcours des récipients 3, lequel se trouve toujours, quel que soit le récipient 3, à la distance R de l'axe de rotation xx' des étoiles.

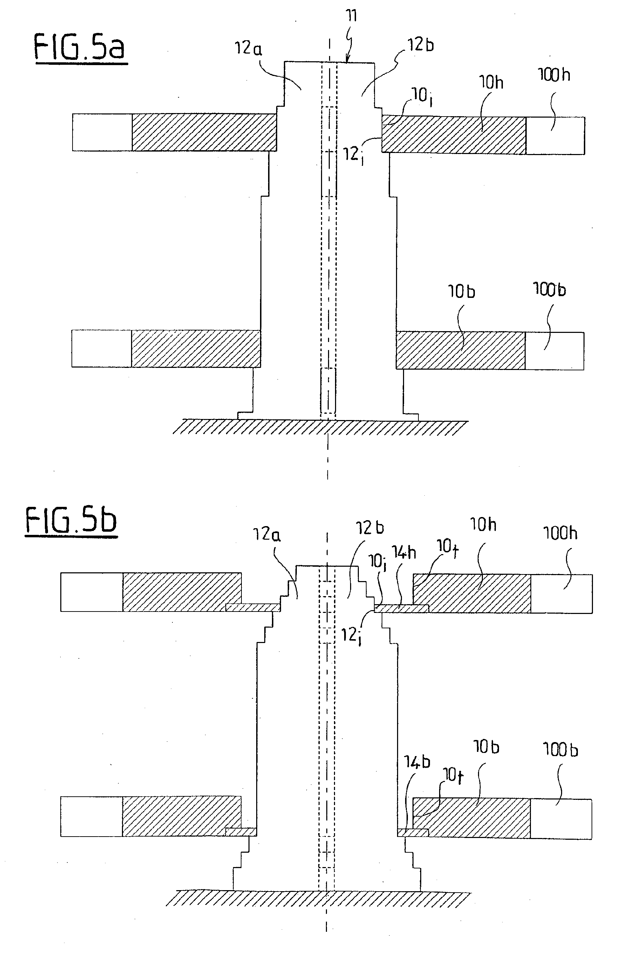

A la Fig. 5a, à l'instar des modes de réalisation des Figs. 2a à 2c et des Figs. 3a et 3b, les plateaux 10h et 10b sont placés directement en appui sur des supports (deux branches 12a et 12b sont visibles sur cette Fig. 5a) et les forme et dimensions de leurs éléments de centrage 10ᵢ respectifs sont ajustées à celles des éléments de support 12ᵢ sur lesquels ils doivent respectivement reposer. Pour la fabrication d'un plateau 10, une fois sa hauteur sur le support 12 déterminée, il est possible de mettre en place l'élément de centrage 10ᵢ aux forme et dimensions correspondant à l'élément de support 12ᵢ qui se trouve à cette hauteur. Cette mise en place consiste généralement, dans les exemples décrits ici, à percer des trous aux forme et dimensions voulues.

A la Fig. 5b, les plateaux 10h et 10b sont pourvus respectivement d'interfaces 14h et 14b qui, elles, comportent les éléments de centrage 10ᵢ, en l'occurrence des trous, dont les forme et dimensions sont ajustées à celles des éléments de support 12ᵢ sur lesquels ces plateaux 10h et 10b doivent respectivement reposer. Dans ce cas, les plateaux 10h et 10b peuvent avoir leurs trous 10ₜ intérieurs identiques.

Un tel arrangement peut être utilisé lorsque les plateaux 10h et 10b sont destinés à entraîner et/ou guider des récipients de sections identiques mais de hauteurs différentes. Dans ce cas, les plateaux 10h et 10b peuvent être conservés car les empreintes 100h et 100b marquées à leurs pourtours sont toujours appropriées. En revanche, les plateaux 10h, 10b pouvant se trouver à différentes hauteurs selon le récipient utilisé, les interfaces 14h et 14b permettent à ces plateaux 10h, 10b d'être positionnés à la hauteur souhaitée tout en prenant appui sur les supports 12a et 12b.

Les interfaces 14h et 14b ont par exemple la forme de disques de diamètre externe permettant leur fixation aux plateaux 10h et 10b correspondant et de diamètre interne correspondant aux diamètres des éléments de support 12ᵢ au niveau voulu. Cette solution permet d'adapter rapidement et à moindre coût les plateaux 10h, 10b précédents à des récipients plus hauts mais de même section.

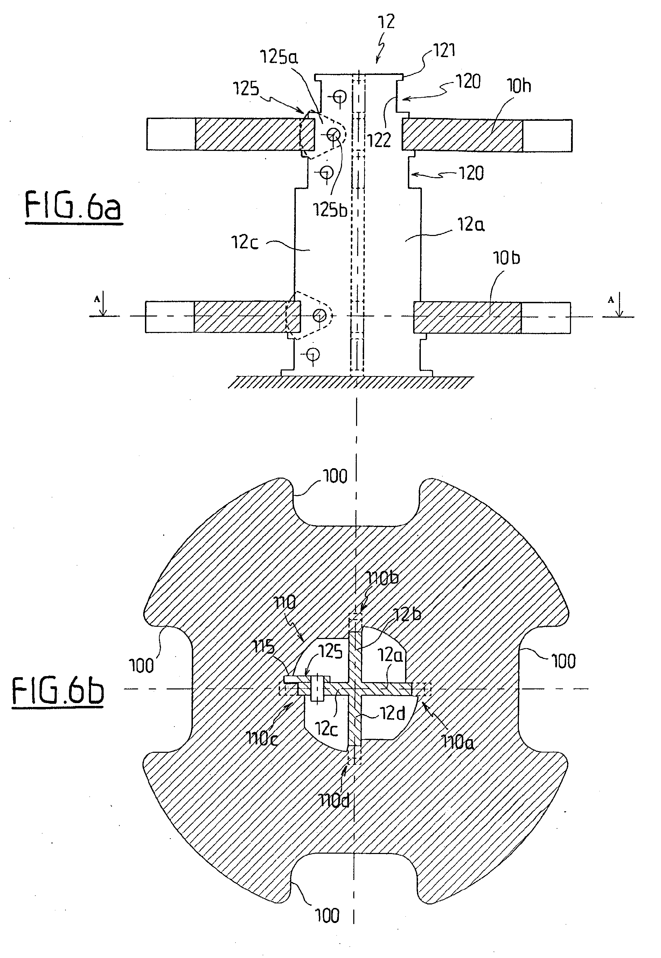

Aux Figs. 6a et 6b, on a représenté un support 12 constitué de quatre branches 12a à 12d, chaque branche comportant des échancrures 120 superposées, chacune étant pourvue d'une rainure 122 dont la largeur est, au jeu près, égale à l'épaisseur d'un plateau 10 de manière à pouvoir loger sa partie intérieure.

On constatera que les échancrures 120 sont respectivement génératrices, par rotation autour de l'axe xx' (ou d'un axe de référence xx' notamment dans le cas d'un support de guide), d'éléments de support.

A la Fig. 6b, on a représenté un plateau 10 avec ses quatre échancrures 100 périphériques et sa partie interne 110. Cette partie intérieure 110 est constituée de quatre secteurs 110a à 110d identiques correspondant avec respectivement aux quatre branches 12a à 12d du support 12 et coopérant avec elles.

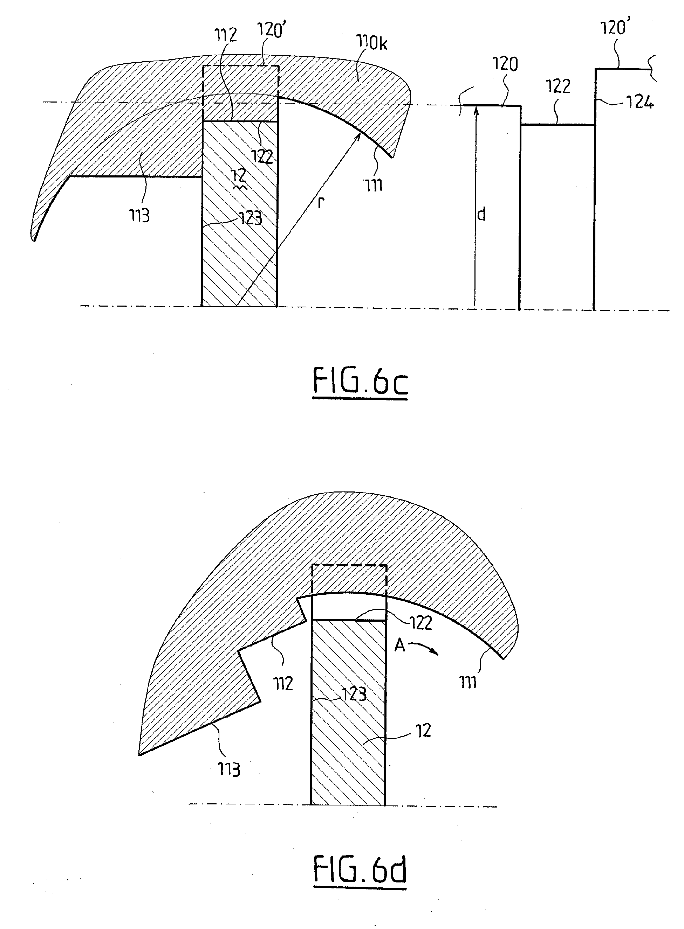

A la Fig. 6c, on a représenté un secteur 110ₖ en gros plan avec, sur la droite une vue de côté. Sur cette Fig. 6c, on peut voir une échancrure 120 avec une rainure 122 et une autre échancrure 120' de distance à l'axe xx' supérieure à celle de l'échancrure 120. Entre les deux échancrures 120 et 120', est formée une base 124 destinée à recevoir un plateau. Le secteur 110ₖ est constitué d'une zone de dégagement 111 réalisée ici sous la forme d'un arc de cercle de centre sur l'axe xx' et de rayon **r**. Comme cela est visible sur la Fig. 6c, le rayon **r** est supérieur à la distance **d** qui sépare l'axe xx' du bord de l'échancrure 120 mais est inférieur à la distance **d'** qui sépare l'axe xx' du bord de l'échancrure 120' de dimension juste supérieure. Le secteur 110ₖ comprend encore une zone de centrage 112 destinée à être logée à l'intérieur de la rainure 122. Cette zone de centrage 112 a donc la même forme et la même dimension que la rainure 122. On notera donc que la rainure 122 est un élément de support selon l'invention et que la zone de centrage 112 est un élément de centrage selon l'invention.

Enfin, le secteur 110ₖ comprend encore une zone de butée 113 prévue pour recevoir une face 123 du support 12 et ainsi bloquer en rotation le plateau 10 sur le support 12.

Comme on peut le voir à la Fig. 6d, pour la mise en place du plateau 10 sur le support 12, on le positionne de manière que chaque branche 12a à 12d soit en vis à vis de chaque zone de dégagement 111, ce qui est rendu possible du fait que le rayon **r** est supérieur à la distance **d**, puis on le fait tourner dans le sens de la flèche A jusqu'à ce que chaque zone de butée 113 soit en butée contre chaque paroi 123 de la branche 12a, ..., 12d correspondante. Alors, on se retrouve dans la position montrée à la Fig. 6c avec la zone de centrage 112 logée dans la rainure 122.

Comme on peut le voir aux Figs. 6a et 6b, au moins l'une des branches, en l'occurrence la seule branche 12c, comporte un moyen de verrouillage 125 essentiellement constitué d'un loquet 125a pivotant autour d'un axe 125b solidaire de la branche 12c et pouvant pénétrer dans une fente 115 que comporte le panneau 10. Ainsi, lorsque le panneau 10 est en position de butée sur le support 12, on fait pivoter le loquet 125a qui pénètre alors dans la fente 115 et immobilise et verrouille le panneau 10 sur le support 12.

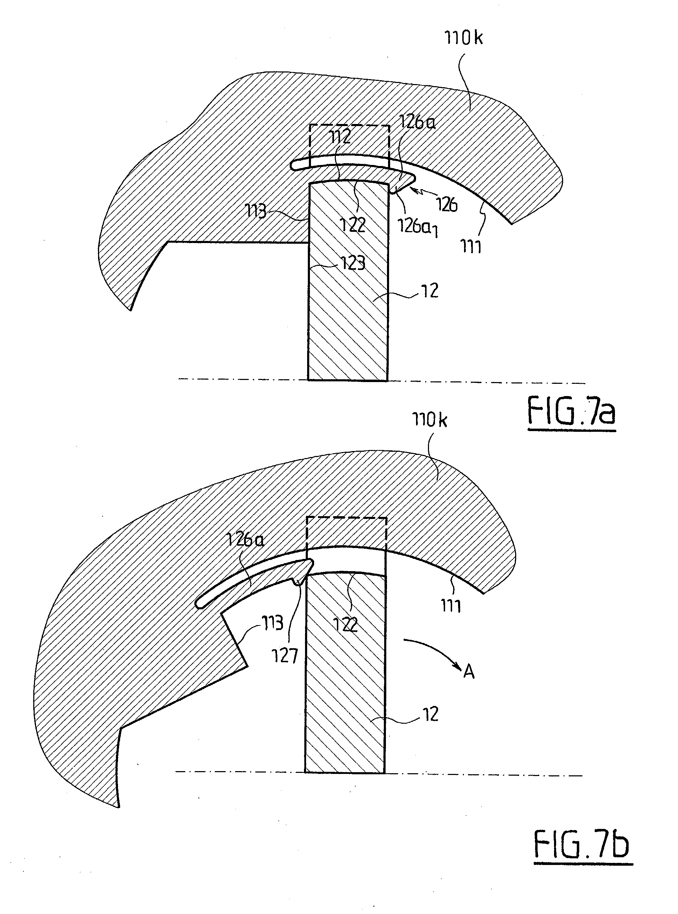

On a représenté aux Figs. 7a à 7c un autre mode de réalisation d'un moyen de verrouillage 126. On reconnaît sur ces Figs. 7a à 7c, un secteur 110ₖ et une branche 12 avec la rainure 122 d'une échancrure 120 ainsi que la zone de dégagement 111 du secteur 110ₖ, sa zone de centrage 112 et sa zone de butée 113. On constate que le moyen de verrouillage 126 est constitué d'une languette 126a qui s'étend sensiblement parallèlement à la rainure 122 de manière qu'une des faces longitudinales constitue la zone de centrage 112, dont l'extrémité libre 126a₁ comporte une excroissance 127 prévue pour enserrer, avec la zone de butée 113, l'extrémité de la branche 12 comportant la rainure 122 et, ce, lorsque le plateau 10 est en position sur le support 12 comme cela est montré à la Fig. 7a.

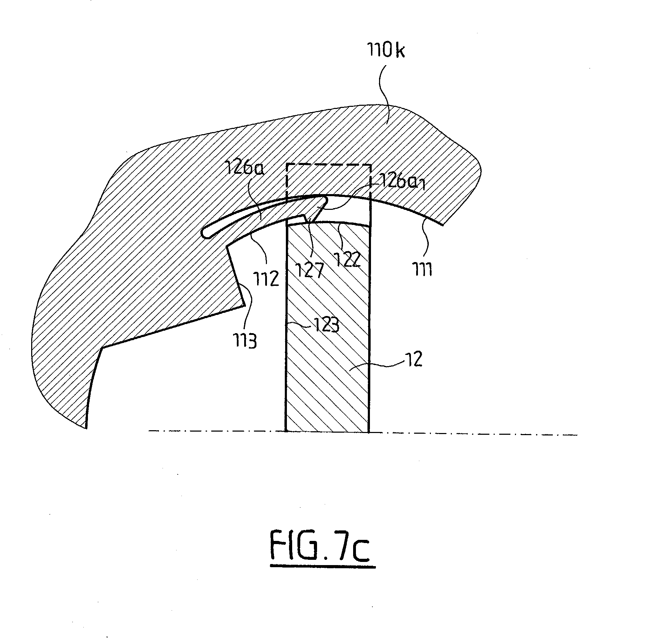

Comme on peut le voir à la Fig. 7b, pour la mise en place du plateau 10 sur le support 12, on le positionne de manière que la branche 12 soit en vis à vis de la zone de dégagement 110, puis on le fait tourner dans le sens de la flèche A jusqu'à ce que l'excroissance 127 de la languette 126a heurte l'extrémité de la rainure 122 comme cela est montré à la Fig. 7b. On continue à tourner dans le sens de la flèche A en forçant légèrement pour permettre à la languette 126a de fléchir, l'excroissance 127 reposant alors dans le fond de la rainure 122, comme cela est montré à la Fig. 7c. On continue encore à tourner jusqu'à ce que la zone de butée 113 soit en butée contre la paroi 123 de la branche 12 comme cela est montré à la Fig. 7a. Là, la languette 126a est revenue dans sa position de repos mais elle enserre maintenant la rainure 122 comme il a été dit plus haut. Le plateau 10 est alors verrouillé.

Pour le déverrouiller, on appuie sur l'extrémité de la languette 126a qui fléchit alors. On fait tourner le plateau 10 pour lui faire prendre la position montrée à la Fig. 7c puis celle qui est montrée à la Fig. 7b. Il est alors libéré et peut donc être extrait.

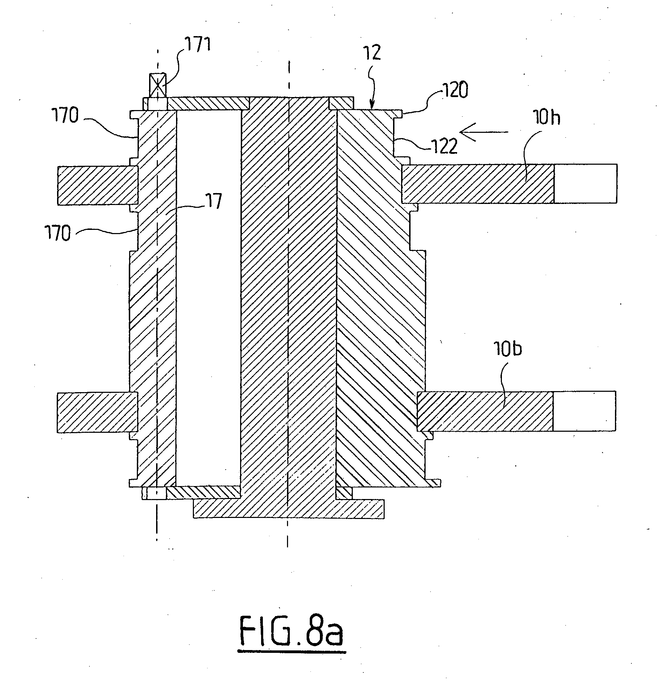

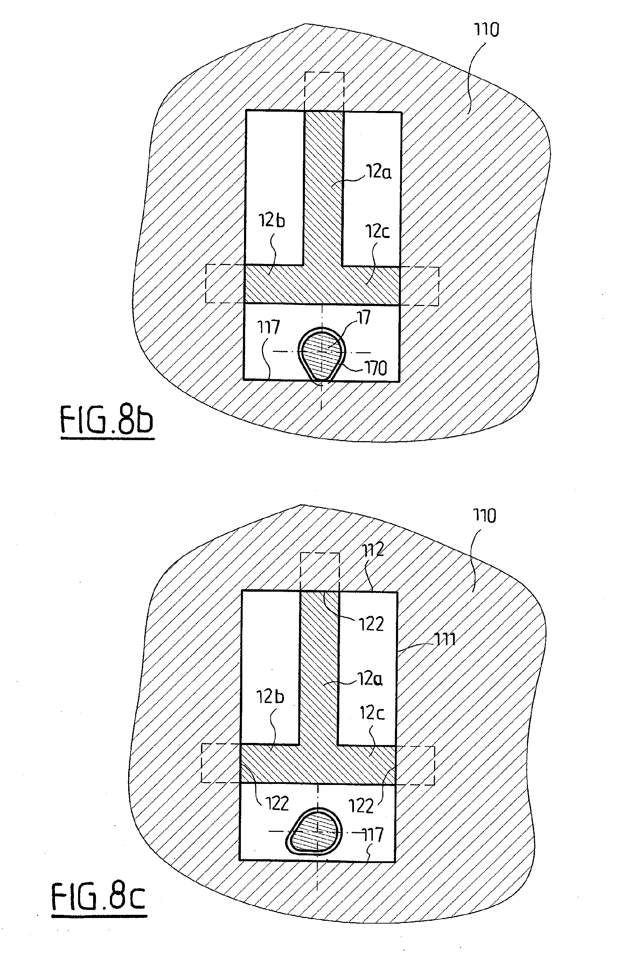

Un troisième type de moyen de verrouillage est représenté aux Figs. 8a à 8c. Sur ces Figs. 8a à 8c, on peut y voir un support 12 constitué de trois branches 12a, 12b et 12c permettant de servir d'appui à des plateaux 10h et 10b dont on ne voit, sur les Figs. 8b et 8c, que la partie interne 110. On voit également les fonds de rainure 122 d'une échancrure 120 et un élément de centrage constitué ici d'un trou 111, par exemple de forme rectangulaire. Une came 17 d'axe parallèle au support 12 et s'étendant sur toute sa hauteur possède des rainures 170 correspondant bi-univoquement aux rainures 122. Un organe de commande 171 placé à l'extrémité supérieure de la came 17 permet de la faire tourner autour de son axe.

Comme on peut le constater, la came 17 prévue pour coopérer avec un élément de serrage 117, en l'occurrence un bord du trou 111 mais qui pourrait être le bord d'un autre trou percé à cet effet, de manière qu'en position de verrouillage (Fig. 8b), ledit plateau 10 soit serré et immobilisé contre ledit support 12 (en l'occurrence, la face 112 du trou 111 est serrée contre le fond de rainure 122) et qu'en dehors de cette position (voir Fig. 8c), ledit plateau 10 soit libre de se déplacer et puisse être libéré dudit support 12.

## Revendications

1. Ensemble outillage (1, 2) - support d'outillage (12, 22) d'une machine de conditionnement de récipients (3), ledit outillage (1, 2) étant prévu pour être monté sur ledit support (12, 22) et servant à entraîner et guider lesdits récipients (3) dans leur déplacement le long d'un trajet au cours duquel ils sont l'objet de traitement de conditionnement, ledit outillage (1, 2) comportant au moins un plateau (10) placé horizontalement à hauteur sur ledit support (12), **caractérisé en ce que** ledit ou chaque support (12, 22) présente une forme telle que la distance d horizontale allant de l'axe du support (12) vers sa périphérie varie en fonction de la hauteur, et **en ce qu'**un plateau (10, 20) comporte un élément de centrage dont la forme et les dimensions correspondent à une partie dudit support, de manière qu'en coopérant avec ladite partie dudit support, sa hauteur sur ledit support (12, 22) soit déterminée par ladite distance d.

2. Ensemble outillage (1, 2) - support d'outillage (12, 22) selon la revendication 1, **caractérisé en ce que** ledit support (12, 22) est constitué d'un unique élément de support conique ou tronconique, chaque plateau (10, 20) comportant un élément de centrage constitué d'un trou tronconique de même conicité que ledit élément de support conique (12, 22) et dont le diamètre moyen est différent d'un plateau à l'autre selon la hauteur de positionnement à laquelle est destiné ledit plateau (10, 20).

3. Ensemble outillage (1, 2) - support d'outillage (12, 22) selon la revendication 1, **caractérisé en ce que** ledit support (12, 22) est constitué d'au moins une branche génératrice dudit élément de support conique ou tronconique par rotation autour d'un axe de référence (xx').

4. Ensemble outillage (1, 2) - support d'outillage (12, 22) selon la revendication 1, **caractérisé en ce que** ledit support (12, 22) est constitué d'une pluralité d'éléments de support (12₁ à 12ₙ ; 22₁ à 22ₙ) superposés de forme et de dimensions prévues pour pouvoir respectivement coopérer avec un élément de centrage (10ᵢ ; 20ᵢ) d'un plateau (10, 20), élément de centrage de forme et de dimensions telles qu'en coopérant avec ledit élément de support, la hauteur dudit plateau (10, 20) sur ledit support (12, 22) soit déterminée.

5. Ensemble outillage (1, 2) - support d'outillage (12, 22) selon la revendication 4, **caractérisé en ce que** lesdits éléments de support (12₁ à 12ₙ ; 22₁ à 22ₙ) sont de forme et de dimensions telles que la section d'un élément de support est inscrite dans celle d'un élément de support juste inférieure.

6. Ensemble outillage (1, 2) - support d'outillage (12, 22) selon la revendication 4 ou 5, **caractérisé en ce que** ledit support (12, 22) est constitué d'au moins une branche (12a, ..., 12d) génératrice desdits éléments de support (12₁ à 12ₙ ; 22₁ à 22ₙ) par rotation autour d'un axe de référence (xx').

7. Ensemble outillage (1, 2) - support d'outillage (12, 22) selon la revendication 6, **caractérisé en ce que** ladite ou chaque branche (12a, ..., 12d) comporte des échancrures (120) respectivement génératrices, par rotation autour dudit axe de référence (xx'), desdits éléments de support (12₁ à 12ₙ ; 22₁ à 22ₙ), la distance de chaque échancrure (120) audit axe de référence (xx') croissant du haut vers le bas.

8. Ensemble outillage (1, 2) - support d'outillage (12, 22) selon la revendication 4, **caractérisé en ce que** le plateau (10) est pourvu d'un trou qui, pour chaque branche, comporte, d'une part, une zone de dégagement (111) dont la périphérie est à une distance **r** de l'axe de référence (xx') supérieure à la distance **d** de l'échancrure (120) avec laquelle ledit plateau (10) est destiné à coopérer mais inférieure à la distance de l'échancrure (120') de dimension juste supérieure et, d'autre part, d'une zone de centrage (112) destinée à coopérer avec ladite échancrure (120).

9. Ensemble outillage (1, 2) - support d'outillage (12, 22) selon la revendication 7 ou 8, **caractérisé en ce que** chaque échancrure (120) est pourvue d'une gorge (122) de largeur égale à la hauteur du plateau (10) qu'elle peut ainsi loger.

10. Ensemble outillage (1, 2) - support d'outillage (12, 22) selon une des revendications 6 à 9, **caractérisé en ce qu'**il comporte des moyens de butée (113, 123) pour immobiliser le plateau (10) en rotation par rapport audit support (12).

11. Ensemble outillage (1, 2) - support d'outillage (12, 22) selon une des revendications précédentes, **caractérisé en ce qu'**il comporte des moyens de verrouillage (125, 126, 17) pour verrouiller ledit outillage (1, 2) sur ledit support d'outillage (12, 22).

12. Ensemble outillage (1, 2) - support d'outillage (12, 22) selon la revendication 11, **caractérisé en ce que** lesdits moyens de verrouillage (125) sont constitués d'un loquet (125a) pouvant pivoter autour d'axe dudit support (12) (ou dudit plateau (10)) de manière à pouvoir prendre deux positions : une position de verrouillage où il se trouve à l'intérieur d'une fente (115) dudit plateau (10) (respectivement dudit support (12)) et une position où il ne s'y trouve pas.

13. Ensemble outillage (1, 2) - support d'outillage (12, 22) selon la revendication 11 ou 12, **caractérisé en ce que** lesdits moyens de verrouillage (126) sont constitués d'une butée (113) et d'une languette élastique (126a) comportant une excroissance (127), ladite butée (113) et ladite excroissance (127) verrouillant ledit plateau (10) sur ledit support (12) lorsqu'il est en place.

14. Ensemble outillage (1, 2) - support d'outillage (12, 22) selon une des revendications 11 à 13, **caractérisé en ce que** lesdits moyens de verrouillage sont constitués d'une came (17) prévue pour coopérer avec un élément de serrage (117) de manière qu'en position de verrouillage, ledit plateau (10) soit serré et immobilisé contre ledit support (12) et qu'en dehors de cette position, ledit plateau (10) soit libre de se déplacer et puisse être libéré dudit support (12).
